# EUROPÄISCHE PATENTSCHRIFT

(11) **EP 0 640 734 B1**
(45) Veröffentlichungstag und Bekanntmachung des Hinweises auf die Patenterteilung: **21.10.1998**
(21) Anmeldenummer: 94113317.5
(22) Anmeldetag: 25.08.1994
(51) Int. Cl.: E05B 47/06, E05B 49/00, H04B 5/00

(54) **System zur kontaktlosen Daten- bzw. Energieübertragung**
Contactless data and/or power transmission system
Système pour la transmission de données et/ou de l'énergie sans contact

(30) Priorität: 31.08.1993 DE 4329315
(43) Veröffentlichungstag der Anmeldung: 01.03.1995
(73) Patentinhaber: SIEMENS AKTIENGESELLSCHAFT, 80333 München (DE)
(72) Erfinder: Feldtkeller, Martin, Dipl.-Ing., D-81543 München (DE)

(56) Entgegenhaltungen:
- EP-A- 0 115 747
- DE-A- 3 517 858
- DE-A- 4 036 575
- DE-C- 4 207 160
- US-A- 4 918 955
- MIKRO ELEKTRONIK, Bd.6, Nr.2, März 1992, VDE DE Seiten 70 - 73 DREWS ET AL 'Datenträger werden intelligent'

## Beschreibung

Die Erfindung betrifft ein System zur kontaktlosen Daten-bzw. Energieübertragung zwischen einer einen Schloßzylinder umschließenden ersten Spule und einer in einem Schlüssel angeordneten zweiten Spule.

Ein solches System ist aus der DE 35 17 858 Al bekannt. Bei der dortigen Verschlußanlage kann eine Zylinderspule um den Schließzylinder eines Schlosses herum angeordnet sein. In einem Schlüssel ist ebenfalls eine Spule angeordnet, so daß mittels der beiden Spulen eine Kommunikation zwischen einer mit der Schließzylinderspule verbundenen Steuereinheit und einer im Schlüssel angeordneten, mit der dortigen Spule verbundenen programmierbaren Schaltung erfolgen kann. Bei der dortigen Schließanlage ist es nicht nötig, daß die Übertragung bei eingestecktem Schlüssel erfolgt; ganz im Gegenteil soll eine Übertragung sogar erfolgen, wenn sich der Schlüssel in einer Tasche seines Besitzers befindet.

Ein derartiges System ist prinzipiell auch aus dem Artikel "Datenträger werden intelligent" aus mikro elektronik (Band 6) 1992, Heft 2, Seite 70ff bekannt. Die Energie- bzw. Datenübertragung erfolgt induktiv über transformatorisch gekoppelte Spulen. Eine Basisstation erzeugt dabei ein konstantes hochfrequentes magnetisches Wechselfeld. Bei ausreichendem magnetischen Fluß durch die Spule des Datenträgers erzeugt die auf dem Träger integrierte Schnittstellenschaltung die notwendige Versorgungsspannung. Die Übertragung der Daten vom Datenträger zur Basisstation erfolgt dabei meistens durch unterschiedliche Belastung der zugehörigen Spule.

Wird ein derartiges System z.B. im Kfz-Bereich für eine elektronische Wegfahrsperre verwendet, so ist die Basisstation Teil des Fahrzeugs und der Datenträger z.B. im Zündschlüssel integriert. Die Sendespule der Basisstation ist dann um den Schloßzylinder herum angeordnet bzw. darin integriert.

Nachteil derartiger Anordnungen ist eine schlechte magnetische Kopplung, da der Abstand zwischen Spule der Basisstation und der des Datenträgers relativ groß ist und das Zündschloß das erzeugte Magnetfeld weitgehend abschirmt. Des weiteren werden kleine Abmessungen der Empfangs spule und eine gute elektromagnetische Verträglichkeit des Systems gefordert.

Die US 4,918,955 offenbart eine Schließzylinderspule, die mit zwei Teilspulen gebildet ist, jedoch sind diese Teilspulen um einen Kern herum angeordnet und so miteinander verschaltet, daß sich ihre Felder innerhalb des Kerns auslöschen. Erst wenn ein Schlüssel, der ebenfalls eine um einen Kern gewikkelte Spule beinhaltet, in den Schließzylinder gesteckt wird können die Felder der Teilspulen des Schließzylinders durch den Kern des Schlüssels verlaufen und damit in der Schlüsselspule eine Spannung induzieren. Hierzu ist es jedoch nötig, daß der Kern des Schlüssels mit dem Kern der Schließzylinderteilspulen in Kontakt kommt bzw. im Inneren des Schließzylinderspulenkerns liegt. Ein solches Übertragungssystem ist aufgrund der notwendigen Spulenkerne sehr aufwendig und teuer.

Aufgabe der vorliegenden Erfindung ist es, ein System zur kontaktlosen Daten- bzw. Energieübertragung vorzugeben, das die vorstehenden Nachteile nicht aufweist und gute elektromagnetische Verträglichkeit sowie kleine Abmessungen der Empfangsspule aufweist. Außerdem sollten bisherige Schloßanordnungen insbesondere im KFZ-Bereich unverändert bleiben.

Diese Aufgabe wird durch die Merkmale des Anspruchs 1 gelöst.

Vorteil der Erfindung ist es, daß durch die zueinander senkrecht stehenden aufgeteilten Spulen eine gute Kopplung gewährleistet wird und durch die Aufteilung der Spule des Schloßzylinders in zwei in Reihe geschalteten Teilspulen das erzeugte Fernfeld vernachlässigt werden kann, wodurch eine gute elektromagnetische Verträglichkeit gewährleistet wird.

Eine vorteilhafte Konfiguration erlaubt die Verwendung eines derartigen Systems in einem Kraftfahrzeug als Schlüssel/Schloß-System, z.B. für eine elektronische Wegfahrsperre, kann aber selbstverständlich bei jedem System verwendet werden, bei dem ein Schlüssel und ein Schloß über jeweils eine Spule miteinander kommunizieren.

Die Erfindung wird nachfolgend anhand von zwei Figuren näher erläutert.

Es zeigen
- Figur 1: eine perspektivische Darstellung eines erfindungsgemäßen Schlüsselschloßsystems,
- Figur 2: eine Aufsicht auf eine erfindungsgemäße Spule einer Basisstation.

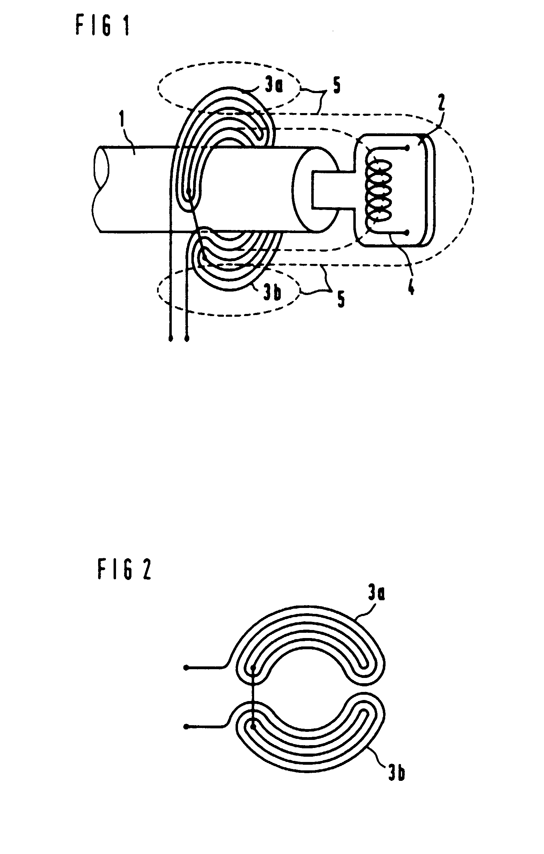

In Figur 1 ist z.B. ein Schlüsselschloßsystem perspektivisch dargestellt. Mit 1 ist ein Schloßzylinder dargestellt, um dessen Umfangsfläche eine aus zwei Teilspulen 3a, 3b bestehende Sende/Empfangsspule angeordnet ist. Beide Spulen 3a und 3b sind in Reihe geschaltet und so angeordnet, daß sie zueinander entgegengesetzte Magnetfelder erzeugen. Die Spule 3a umfaßt dabei die obere halbkreisförmige Schnittfläche des Schloßzylinders und die Spule 3b die untere halbkreisförmige Schnittfläche. Zusammen umschließen die beiden Spulen 3a und 3b den Schloßzylinder. Beide Spulen 3a und 3b liegen dabei vorzugsweise in einer Ebene. Figur 2 zeigt diese Ebene in einer Aufsicht auf eine derartige erfindungsgemäße Spule.

Mit 2 ist in Figur 1 ein Schlüssel schematisch dargestellt, in dessen Innenraum eine Empfangsspule 4 vorgesehen ist.Geometrisch ist die Spule 4 im Schlüssel zwischen den beiden Teilspulen 3a, 3b des Schlosses angeordnet. Nachgeschaltete Auswerteschaltungen und Speicher sind in dieser Darstellung der Übersichtlichkeit halber nicht dargestellt. Die Spule 4 im Schlüssel 2 ist derart ausgerichtet, daß ihre Spulenachse senkrecht zu den Achsen der Teilspulen 3a und 3b steht. Auch durch Drehen des Schlüssels 2 im Zündschloß wird diese geometrische Zuordnung nicht verändert.

Die gestrichelten Linien 5 kennzeichnen die magnetischen Feldlinien, die von der Senderspule 3a, 3b erzeugt werden. Aufgrund der Anordnung wird eine geringe Abstrahlung aber auch eine geringe Einstrahlempfindlichkeit für Fernfelder gewährleistet. Daher ergibt sich eine gute elektromagnetische Verträglichkeit. Des weiteren wird die Induktivität der Sendespule durch das Zündschloß 1 nur wenig verändert. Auch bei den relativ großen Abständen bei einem derartigen System wird durch die erfindungsgemäße Anordnung eine gute magnetische Kopplung erreicht.

## Patentansprüche

1. System zur kontaktlosen Daten- bzw. Energieübertragung zwischen einer einen Schloßzylinder (1) umschließenden ersten Spule (3a, 3b) und einer in einem in den Schloßzylinder eingesteckken Schlüssel (2) angeordneten zweiten Spule (4),
**dadurch gekennzeichnet,**
daß die erste Spule aus zwei in Reihe geschalteten Teilspulen (3a, 3b) gebildet ist, wobei die im Spuleninnern verlaufenden Hauptmagnetfeldlinien der einen Teilspule (3a) parallel zu denen der anderen Teilspule (3b) verlaufen,
daß die Teilspulen (3a, 3b) zueinander entgegengesetzte, sich zu einem Ringfeld (5) ergänzende Magnetfelder erzeugen,
daß die Achse der zweiten Spule (4) bei in den Schloßzylinder (1) eingestecktem Schlüssel (2) in jeder Stellupg senkrecht zu den im Spuleninnern verlaufenden Hauptmagnetfeldlinien der Teilspulen (3a, 3b) verläuft und
daß die räumliche Zuordnung der zweiten Spule (4) zu den Teilspulen (3a, 3b) derart ist, daß sie von dem von den Teilspulen (3a, 3b) bei einer Übertragung erzeugten Ringfeld (5) durchdrungen wird.

## Claims

1. System for contactless data and/or power transmission between a first coil (3a, 3b) enclosing a lock barrel (1) and a second coil (4) arranged in a key (2), which is inserted into the lock barrel,
**characterized**
in that the first coil is formed from two coil elements (3a, 3b) connected in series, the main magnetic field lines, running within the coil, of one coil element (3a) running parallel to those of the other coil element (3b),
in that the coil elements (3a, 3b) generate mutually opposite magnetic fields which complement one another to form an annular field (5),
in that the axis of the second coil (4), with the key (2) inserted into the lock barrel (1), runs perpendicularly to the main magnetic field lines, running within the coil, of the coil elements (3a, 3b) in every position, and
in that the spatial assignment of the second coil (4) to the coil elements (3a, 3b) is such that it is permeated by the annular field (5) generated by the coil elements (3a, 3b) in the event of a transmission.

## Revendications

1. Système pour la transmission de données et/ou de l'énergie sans contact entre une première bobine (3a, 3b) entourant un cylindre de serrure (1) et une deuxième bobine (4) disposée dans une clé (2) insérée dans le cylindre de serrure, caractérisé en ce que la première bobine est formée de deux bobines partielles (3a, 3b) montées en série, les lignes du champ magnétique principal, s'étendant à l'intérieur des bobines, de la bobine partielle (3a), étant parallèles à celles de l'autre bobine partielle (3b), en ce que les bobines partielles (3a, 3b) créent des champs magnétiques opposés l'un à l'autre qui se joignent en formant un champ annulaire (5), en ce que, lorsque la clé (2) est insérée dans le cylindre de serrure (1), dans chaque position, l'axe de la deuxième bobine (4) est vertical par rapport aux lignes du champ magnétique principal, s'étendant à l'intérieur des bobines, des bobines partielles (3a, 3b) et en ce que l'affectation spatiale de la deuxième bobine (4), par rapport aux bobines partielles (3a, 3b), est telle qu'elle est pénétrée par le champ annulaire (5) créé par les bobines partielles (3a, 3b) lors d'une transmission.
